# EUROPÄISCHE PATENTSCHRIFT

(11) **EP 2 328 954 B1**
(45) Veröffentlichungstag und Bekanntmachung des Hinweises auf die Patenterteilung: **03.07.2013**
(21) Anmeldenummer: 09760463.1
(22) Anmeldetag: 15.09.2009
(51) Int. Cl.: C08G 77/60, C08G 77/50

(54) **VERFAHREN ZUR HERSTELLUNG VON HALOGENIERTEN OLIGOMEREN UND/ODER HALOGENIERTEN POLYMEREN VON ELEMENTEN DER III. BIS V. HAUPTGRUPPE**
METHOD FOR PRODUCING HALOGENATED OLIGOMERS AND/OR HALOGENATED POLYMERS OF ELEMENTS OF THE THIRD TO FIFTH MAIN GROUP
PROCÉDÉ DE PRODUCTION D'OLIGOMÈRES HALOGÉNÉS ET/OU DE POLYMÈRES HALOGÉNÉS D'ÉLÉMENTS DU 3ÈME AU 5ÈME GROUPE PRINCIPAL

(30) Priorität: 17.09.2008 DE 102008047739; 18.09.2008 DE 102008047940
(43) Veröffentlichungstag der Anmeldung: 08.06.2011
(73) Patentinhaber: Spawnt Private S.à.r.l., 1148 Luxembourg (LU)
(72) Erfinder: AUNER, Norbert, 61479 Glashütten (DE); BAUCH, Christian, 06766 Bitterfeld-Wolfen (DE); DELTSCHEW, Rumen, 04319 Leipzig (DE); GEBEL, Thoralf, 01465 Dresden-Langebrück (DE); HOLL, Sven, 65558 Gückingen (DE); LIPPOLD, Gerd, 04179 Leipzig (DE); MOHSSENI, Javad, 06766 Bitterfeld-Wolfen (DE)
(74) Vertreter: Epping - Hermann - Fischer
(86) Internationale Anmeldenummer: PCT/DE2009/001299
(87) Internationale Veröffentlichungsnummer: WO 2010/031390

(56) Entgegenhaltungen:
- WO-A-2008/009473
- DE-A1-102005 024 041

## Beschreibung

Die vorliegende Erfindung betrifft ein Verfahren zur Herstellung von halogenierten Oligomeren und/oder halogenierten Polymeren von Elementen der III. bis V. Hauptgruppe.

Aus der DE 10 2005 024 041 A1 ist ein Verfahren zur Herstellung von Silicium aus Halogensilanen bekannt, bei dem in einem ersten Schritt das Halogensilan unter Erzeugung einer Plasmaentladung zu einem halogenierten Polysilan umgesetzt wird, das nachfolgend in einem zweiten Schritt unter Erhitzen zu Silicium zersetzt wird.

In der nicht vorveröffentlichten PCT-EP 2008/002109 sind eine Vorrichtung und ein Verfahren zur plasmagestützten Synthese von halogenierten Polysilanen oder Polygermanen beschrieben. Bei diesem Verfahren werden Halogensilane oder Halogengermane auf plasmagestützte Weise zu halogenierten Oligo- und Polysilanen oder Oligo- und Polygermanen umgesetzt.

Die nicht vorveröffentlichte DE 10 2007 013 219.2 betrifft ein Verfahren und eine Vorrichtung zur plasmagestützten Synthese von halogenierten Oligo- und Polymeren der III. bis V. Hauptgruppe, wobei insbesondere die mit Cl oder F halogenierten Elemente Si, Ge, Sn und B der III. bis V. Hauptgruppe mit H₂ zur plasmagestützten Polymerisation gebracht werden.

Bei den vorstehend beschriebenen Verfahren des Standes der Technik findet jeweils ein einziger Kettenbildner Verwendung, bei dem es sich um eine Halogenverbindung der III. bis V. Hauptgruppe handelt, wie beispielsweise ein Halogensilan (SiCl₄) oder ein Halogengerman (GeCl₄). Unter Erzeugung eines Plasmas, insbesondere mit Wasserstoff, findet die gewünschte Polymerisation zur Herstellung von beispielsweise halogenierten Polysilanen oder halogenierten Polygermanen statt.

Der vorliegenden Erfindung liegt die Aufgabe zugrunde, ein weiteres Verfahren zur Herstellung von halogenierten Oligomeren und/oder halogenierten Polymeren von Elementen der III. bis V. Hauptgruppe zur Verfügung zu stellen. Dieses Verfahren soll auf betriebssichere, umweltfreundliche, energieeffiziente und kostengünstige Weise realisierbar sein sowie halogenierte Oligomere und/oder halogenierte Polymere in großer Ausbeute liefern.

Diese Aufgabe wird erfindungsgemäß durch ein Verfahren zur Herstellung von halogenierten Oligomeren und/oder halogenierten Polymeren von Elementen der III. bis V. Hauptgruppe gelöst, bei dem die halogenierten Oligomere und/oder halogenierten Polymere auf plasmachemische Weise aus einem ersten Kettenbildner eines Elements der III. bis V. Hauptgruppe und einem zweiten Kettenbildner eines zum ersten Kettenbildner unterschiedlichen Elements der III. bis V. Hauptgruppe, von denen mindestens einer eine Halogenverbindung eines Elementes der III. bis V. Hauptgruppe ist, synthetisiert werden.

Bei dem erfindungsgemäßen Verfahren finden somit im Unterschied zum vorstehend beschriebenen Stand der Technik zwei Kettenbildner als Ausgangssubstanzen Verwendung, von denen mindestens einer eine Halogenverbindung eines Elementes der III. bis V. Hauptgruppe ist. Beispiele von derartigen Halogenverbindungen der Elemente der III. bis V. Hauptgruppe sind Halogensilane, wie SiX₄, oder Halogengermane wie GeX₄ , wobei X, F, Cl, Br oder I bedeutet. Dabei kann sowohl der erste Kettenbildner als auch der zweite Kettenbildner aus einer derartigen Halogenverbindung eines Elementes der III. bis V. Hauptgruppe bestehen. Es werden dann solche halogenierten Oligomere und/oder halogenierten Polymere, wie halogenierte Polygermasilane, erhalten. Ein Beispiel eines Verfahrens, bei dem nur ein Kettenbildner aus einer Halogenverbindung eines Elementes der III. bis V. Hauptgruppe besteht, betrifft die Herstellung von halogenierten Polycarbosilanen, wobei als erster Kettenbildner Halogensilan und als zweiter Kettenbildner eine Kohlenwasserstoffverbindung verwendet wird.

Weitere Elemente der III. bis V. Hauptgruppe, die für das erfindungsgemäße Verfahren geeignet sind, sind neben Silicium und Germanium beispielsweise Thallium, Indium, Gallium. Als Verbindungen sind beispielsweise Nitride oder Carbide der vorstehend genannten Elemente insbesondere von Silicium, geeignet. Ein weiterer Kettenbildner ist Kohlenstoff, insbesondere in der Form von Kohlenwasserstoffverbindungen.

Vorzugsweise werden die halogenierten Oligomere und/oder halogenierten Polymere von Elementen der III. bis V. Hauptgruppe in Gegenwart von Wasserstoff plasmachemisch synthetisiert. Bei dieser Ausführungsform des erfindungsgemäßen Verfahrens wird daher als drittes Edukt Wasserstoff in die Reaktion einbezogen.

Bei einer ersten Variante des erfindungsgemäßen Verfahrens wird ein Plasma in einem aus dem ersten Kettenbildner und dem zweiten Kettenbildner bestehenden oder diese enthaltenden Gas erzeugt. Wie vorstehend erwähnt, kann dieses Gas auch Wasserstoff enthalten. Es wird ein entsprechendes Gasgemisch erzeugt, in dem ein Plasma generiert wird. Hierbei erfolgt die Umsetzung zu halogenierten Oligomeren und/oder halogenierten Polymeren, beispielsweise zu halogenierten Polygermasilanen oder halogenierten Polycarbosilanen. Die erzeugten Substanzen werden dann in geeigneter Weise isoliert.

Bei einer zweiten Variante des erfindungsgemäßen Verfahrens wird das Plasma in einem Gas erzeugt, dem nachträglich ein aus dem ersten Kettenbildner und/oder dem zweiten Kettenbildner und/oder Wasserstoff und/oder einem weiteren Stoff bestehendes oder diese enthaltendes Gas zugesetzt wird. Bei diesem sogenannten Remote-Verfahren kann beispielsweise ein Plasma in Wasserstoff erzeugt werden, wobei nachträglich ein Gasgemisch aus dem ersten Kettenbildner und dem zweiten Kettenbildner und/oder Wasserstoff und/oder einem weiteren Stoff zugesetzt wird. Bei einer anderen Ausführungsform wird das Plasma in einem Gas erzeugt, das aus dem ersten Kettenbildner oder dem zweiten Kettenbildner besteht oder diese enthält, und der andere Kettenbildner wird nachträglich zugesetzt. Bei einer weiteren Ausführungsform wird das Plasma in einem anderen Gas, z.B. einem Edelgas, erzeugt, und das Gas, das aus dem ersten Kettenbildner und dem zweiten Kettenbildner und optional Wasserstoff und einem weiteren Stoff besteht oder diese enthält, wird nachträglich zugesetzt.

Generell kann das Gas, in dem das Plasma erzeugt wird, zusätzlich Wasserstoff und/oder ein verdünnendes inertes Gas und/oder ein Plasma begünstigende Zumischungen enthalten.

Bei einer Ausführungsform des erfindungsgemäßen Verfahrens werden der erste und zweite Kettenbildner je von einer Halogenverbindung eines Elementes der III. bis V. Hauptgruppe gebildet. Mit dieser Ausführungsform des erfindungsgemäßen Verfahrens wird beispielsweise halogeniertes Polygermasilan erzeugt, vorzugsweise chloriertes Polygermasilan (PCGS).

Bei einer anderen Ausführungsform des erfindungsgemäßen Verfahrens wird ein Kettenbildner von Kohlenstoff oder einer Kohlenwasserstoffverbindung gebildet. Bei der Kohlenwasserstoffverbindung kann es sich um aliphatische oder aromatische Kohlenwasserstoffverbindungen, insbesondere um Alkane, Alkene, Alkine oder Aromaten oder deren teil- oder vollhalogenierte Derivate handeln. Auf diese Weise lassen sich beispielsweise halogenierte Polycarbosilane herstellen, beispielsweise chlorierte Polycarbosilane (PCCS) aus SiCl₄ als erstem Kettenbildner und CH₄ als zweiten Kettenbildner. Solche halogenierten Polycarbosilane weisen dabei einen signifikanten Gehalt an Methylgruppen auf. Sie eignen sich aufgrund ihrer Zusammensetzung für die Abscheidung von Siliciumcarbid/-schichten. Halogenierte Polycarbosilane sind als Single-Source-Precursor für die Abscheidung von Siliciumcarbid SiC geeignet und können bei besonders niedriger Temperatur aus flüssiger Phase zu SiC thermolysiert werden.

Die erfindungsgemäß hergestellten halogenierten Oligomere und/oder halogenierten Polymere weisen vorzugsweise ein Atomverhältnis von Substituent : (erster Kettenbildner + zweiter Kettenbildner) von mindestens 1:1 auf.

Insbesondere werden mit dem erfindungsgemäßen Verfahren halogenierte Polygermasilane durch die Erzeugung und Verwendung von Plasmen hergestellt. Vorzugsweise werden dabei Halogensilan, Halogengerman und Wasserstoff miteinander vermischt, und das erhaltene Gasgemisch wird unter Erzeugung eines Plasmas zum Polygermasilan umgesetzt.

Ein nichteinschränkendes Beispiel für eine Halogenverbindung im Rahmen dieser Erfindung ist EₐX_{b}R_{c} mit E = Elementatom, X = Halogenatom; R = H und/oder organischer Rest und/oder anderer Substituent, a = 1 oder größer, b = 1 oder größer, c = 0 oder größer.

Als Halogensilan im Sinne des erfindungsgemäßen Verfahrens werden insbesondere Verbindungen des Typs HₙSiX₄₋ₙ oder deren Mischungen eingesetzt. Als Halogengerman im Sinne des erfindungsgemäßen Verfahrens werden insbesondere Verbindungen des Typs HₙGeX₄₋ₙ oder deren Mischungen eingesetzt. Dabei bedeuten: X = F, Cl, Br, I und n = 0-3.

Mit dem erfindungsgemäßen Verfahren lassen sich halogenierte Oligomere und/oder halogenierte Polymere, insbesondere halogenierte Polysilagermane, herstellen, die sich durch einen besonders geringen Wasserstoffgehalt auszeichnen. Diese hochhalogenierten Oligomere und/oder halogenierten Polymere sind dadurch charakterisiert, dass nahezu ausschließlich Halogensubstituenten und nur geringe Mengen Wasserstoffsubstituenten vorhanden sind.

Die mit dem erfindungsgemäßen Verfahren hergestellten halogenierten Polysilagermane können als "Single-Source-Precursor" für die Herstellung von Silicium-Germanium-Legierungen dienen, welche beispielsweise in Form von Schichten erhalten werden können. Dadurch können Si-Ge-Schichten bei vergleichsweise niedrigen Temperaturen auf Substraten abgeschieden werden. Ferner sind Anwendungen in der metallorganischen Chemie denkbar, beispielsweise zur Herstellung von leitfähigen Polymeren, LED's etc.

Insbesondere werden erfindungsgemäß chlorierte Oligogermasilane und/oder chlorierte Polygermasilane (PCGS) aus RₙSiCl₄₋ₙ (R = H und/oder organischer Rest, n = 0 bis 4), R'ₘGeCl₄₋ₘ (R' = H und/oder organischer Rest, m = 0 bis 4, m + n = 0 bis 7) und/oder H2, sowie chlorierte Oligocarbosilane und/oder chlorierte Polycarbosilane (PCCS) aus RₙSiCl₄₋ₙ (R = H und/oder organischer Rest, n = 0 bis 3) und CH4 hergestellt.

Generell wird bei dem erfindungsgemäßen Verfahren vorzugsweise mit weichen Plasmabedingungen mit geringem Energieeintrag gearbeitet. Dabei findet vorzugsweise eine Leistungsdichte von 0,2-2 W/cm³ Anwendung. Auch kommen relativ niedrige Drücke zur Anwendung, bevorzugt 0,1-3 hPa.

Als Reaktionstemperaturen finden vorzugsweise Temperaturen von weniger als 400 °C, bevorzugter von weniger als 300 °C, Verwendung (beispielsweise als Reaktorwandtemperatur bestimmt).

Die Plasmaerzeugung kann ferner zusätzlich durch geeignete Maßnahmen unterstützt werden, wie sie beispielsweise in der eingangs erwähnten DE 10 2005 024 041 A1 beschrieben sind. Zur Erzeugung und Stabilisierung des Plasmas kann ebenfalls auf die in dieser Veröffentlichung beschriebenen Maßnahmen zurückgegriffen werden.

Bevorzugte Halogene sind Cl und F.

Die Erfindung betrifft ferner halogenierte Oligomere und/oder halogenierte Polymere, die nach dem vorstehend beschriebenen Verfahren hergestellt sind. Ferner betrifft die Erfindung die Verwendung von halogenierten Oligomeren und/oder halogenierten Polymeren, wie in den Ansprüchen angegeben. Der hier verwendete Begriff "Legierung" soll dabei auch Verbindungen und Gemenge aus mindestens zwei Elementen der III. bis V. Hauptgruppe abdecken.

Die allgemeine Summenformel der erfindungsgemäß hergestellten halogenierten Polygermasilane ist insbesondere Ge_{b}Si_{c}Xₐ mit 1 ≤ c ≤ 1.000.000; 2 ≤ (b+c) ≤ 1.000.000; 1 ≤ a/(b+c) ≤ 3.

Die allgemeine Summenformel für die erfindungsgemäß hergestellten halogenierten Polycarbosilane ist insbesondere A_{c}E_{b}XₐR'_{d} mit E = Elementatom; A = Alkylen (z.B. -CH₂-), Alkenylen und/oder Alkinylen und/oder Arylen; R' = H und/oder Alkyl und/oder Alkenyl und/oder Alkinyl und/oder Aryl; 1 ≤ (a+d)/b ≤ 3; 2 ≤ b ≤ 1.000.000; 1 ≤ c ≤ 1.000.000. Dabei bilden E und A das Grundgerüst des halogenierten Polycarbosilanes, während X und R' Substituenten am E sind.

Alkylen, Alkenylen und Alkinylen stehen für bivalente Alkylgruppen, die im Falle von Alkenylen bzw. Alkinylen eine, zwei, drei, vier, fünf oder mehr Doppelbindungen bzw. Dreifachbindungen und dementsprechend mindestens 2 Kohlenstoffatome aufweisen, beispielsweise und vorzugsweise für Methylen, Ethylen, Ethenylen, Ethinylen, n-Propylen, isoPropylen, n-Propenylen, Methylethenylen und Propinylen. Arylen steht für einen bivalenten mono-/bi-tricyclischen aromatischen, carbocyclischen Rest mit in der Regel 6 bis 14 Kohlenstoffatomen, beispielhaft und vorzugsweise für Phenylen, Naphthylen und Phenanthrenylen.

Alkyl und/oder Alkenyl und/oder Alkinyl und/oder Aryl stehen für mdnovalente Kohlenwasserstoffreste, die im Falle von Alkenyl bzw. Alkinyl eine, zwei, drei, vier, fünf oder mehr Doppel- bzw. Dreifachbindungen und dementsprechend mindestens 2 Kohlenstoffatome aufweisen, beispielsweise und vorzugsweise für Methyl, Ethyl, Ethenyl, Ethinyl, n-Propyl, iso-Propyl, n-Propenyl, Methylethenyl und Propinyl. Arylen steht für einen bivalenten mono-/bi-/tricyclischen aromatischen, carbocyclischen Rest mit in der Regel 6 bis 14 Kohlenstoffatomen, beispielhaft und vorzugsweise für Phenyl, Naphthyl und Phenanthrenyl.

## Patentansprüche

1. Verfahren zur Herstellung von halogenierten Oligomeren und/oder halogenierten Polymeren von Elementen der III. bis V. Hauptgruppe, bei dem die halogenierten Oligomere und/oder halogenierten Polymere auf plasmachemische Weise aus einem ersten Kettenbildner eines Elements der III. bis V. Hauptgruppe und einem zweiten Kettenbildner eines zum ersten Kettenbildner unterschiedlichen Elements der III. bis V. Hauptgruppe, von denen mindestens einer eine Halogenverbindung eines Elementes der III. bis V. Hauptgruppe ist, synthetisiert werden.

2. Verfahren nach dem vorangehenden Anspruch, **dadurch gekennzeichnet, dass** der erste und zweite Kettenbildner je eine Halogenverbindung eines Elementes der III. bis V. Hauptgruppe sind.

3. Verfahren nach einem der vorangehenden Ansprüche, **dadurch gekennzeichnet, dass** der erste oder zweite Kettenbildner Halogensilan ist.

4. Verfahren nach einem der vorangehenden Ansprüche, **dadurch gekennzeichnet, dass** der erste oder zweite Kettenbildner Halogengerman ist.

5. Verfahren nach einem der Ansprüche 1 und 3 bis 4, **dadurch gekennzeichnet, dass** ein Kettenbildner eine Kohlenwasserstoffverbindung ist.

6. Verfahren nach einem der vorangehenden Ansprüche, **dadurch gekennzeichnet, dass** es zur Herstellung von halogenierten Polygermasilanen dient.

7. Verfahren nach einem der Ansprüche 1-5, **dadurch gekennzeichnet, dass** es zur Herstellung von halogenierten Polycarbosilanen dient.

8. Verfahren nach einem der vorangehenden Ansprüche, **dadurch gekennzeichnet, dass** halogenierte Oligomere und/oder halogenierte Polymere hergestellt werden, die nahezu ausschließlich Halogensubstituenten aufweisen.

9. Verfahren nach einem der vorangehenden Ansprüche, **dadurch gekennzeichnet, dass** chlorierte Oligogermasilane und/oder chlorierte Polygermasilane (PCGS) aus RₙSiCl₄₋ₙ (R = H und/oder organischer Rest, n = 0 bis 4), R'ₘGeCl₄₋ₘ (R' = H und/oder organischer Rest, m = 0 bis 4, m + n = 0 bis 7) und/oder H₂ synthetisiert werden.

10. Verfahren nach einem der vorangehenden Ansprüche, **dadurch gekennzeichnet, dass** chlorierte Oligocarbosilane und/oder chlorierte Polycarbosilane (PCCS) aus RₙSiCl₄₋ₙ (R = H und/oder organischer Rest, n = 0 bis 3) und CH₄ synthetisiert werden.

11. Verfahren nach einem der vorangehenden Ansprüche, **dadurch gekennzeichnet, dass** der erste und/oder zweite Kettenbildner ein Elementhalogenid der III. bis V. Hauptgruppe der Formel EₐXbR_{c} (E = Elementatom, 1 = a, X = Halogenatom, 1 = b, R = H und/oder organischer Rest und/oder anderer Substituent, 0 = c) ist.

12. Halogenierte Oligomere und/oder halogenierte Polymere, **dadurch gekennzeichnet, dass** sie mit einem Verfahren der vorangehenden Ansprüche hergestellt worden sind.

13. Verwendung von halogenierten Oligomeren und/oder halogenierten Polymeren nach Anspruch 12 als Ausgangsverbindung (Precursor) für die Herstellung von Legierungen.

14. Verwendung von halogenierten Oligomeren und/oder halogenierten Polymeren nach Anspruch 12 zur Herstellung von Carbiden oder Nitriden.

15. Verwendung nach Anspruch 14 zur Abscheidung von Carbid - oder Nitridschichten auf Substraten.

## Claims

1. Method for producing halogenated oligomers and/or halogenated polymers of elements of main groups III to V which comprises synthesizing the halogenated oligomers and/or halogenated polymers in a plasma-chemical manner from a first chain-former of an element of main groups III to V and a second chain-former of an element of main groups III to V which is different from the first chain-former, of which at least one is a halogen compound of an element of main groups III to V.

2. Method according to the preceding claim, **characterized in that** the first and second chain-formers are each a halogen compound of an element of main groups III to V.

3. Method according to any preceding claim, **characterized in that** the first or second chain-former is halosilane.

4. Method according to any preceding claim, **characterized in that** the first or second chain-former is halogermane.

5. Method according to any of Claims 1 and 3 to 4, **characterized in that** one chain-former is a hydrocarbon compound.

6. Method according to any preceding claim, **characterized in that** it is used for producing halogenated polygermasilanes.

7. Method according to any of Claims 1-5, **characterized in that** it is used for producing halogenated polycarbosilanes.

8. Method according to any preceding claim, **characterized in that** halogenated oligomers and/or halogenated polymers having almost exclusively halogen substituents are produced.

9. Method according to any preceding claim, **characterized in that** chlorinated oligogermasilanes and/or chlorinated polygermasilanes (PCGS) are synthesized from RₙSiCl₄₋ₙ (R=H and/or an organic radical, n = 0 to 4), R'ₘGeCl₄₋ₘ (R' = H and/or organic radical, m = 0 to 4, m + n = 0 to 7) and/or H₂.

10. Method according to any preceding claim, **characterized in that** chlorinated oligocarbosilanes and/or chlorinated polycarbosilanes (PCCS) are synthesized from RₙSiCl₄₋ₙ (R = H and/or organic radical, n = 0 to 3) and CH₄.

11. Method according to any preceding claim, **characterized in that** the first and/or second chain-former is a main group III to V element halide of the formula EₐX_{b}R_{c} (E = element atom, 1 ≤ a, X = halogen atom, 1 ≤ b, R = H and/or organic radical and/or other substituent, 0 ≤ c).

12. Halogenated oligomers and/or halogenated polymers, **characterized in that** they are obtained using a method of the preceding claims.

13. Use of halogenated oligomers and/or halogenated polymers according to Claim 12 as starting compound (precursor) for the production of alloys.

14. Use of halogenated oligomers and/or halogenated polymers according to Claim 12 for producing carbides or nitrides.

15. Use according to Claim 14 for depositing carbide or nitride layers on substrates.

## Revendications

1. Procédé de fabrication d'oligomères halogénés et/ou de polymères halogénés d'éléments des groupes principaux III à V, selon lequel les oligomères halogénés et/ou les polymères halogénés sont synthétisés chimiquement par plasma à partir d'un premier agent de formation de chaîne d'un élément des groupes principaux III à V et d'un second agent de formation de chaîne d'un élément des groupes principaux III à V différent du premier agent de formation de chaîne, parmi lesquels au moins un est un composé halogéné d'un élément des groupes principaux III à V.

2. Procédé selon la revendication précédente, **caractérisé en ce que** le premier et le second agent de formation de chaîne sont chacun un composé halogéné d'un élément des groupes principaux III à V.

3. Procédé selon l'une quelconque des revendications précédentes, **caractérisé en ce que** le premier ou le second agent de formation de chaîne est un halogénosilane.

4. Procédé selon l'une quelconque des revendications précédentes, **caractérisé en ce que** le premier ou le second agent de formation de chaîne est un halogénogermane.

5. Procédé selon l'une quelconque des revendications 1 et 3 à 4, **caractérisé en ce qu'**un agent de formation de chaîne est un composé hydrocarboné.

6. Procédé selon l'une quelconque des revendications précédentes, **caractérisé en ce qu'**il sert à la fabrication de polygermasilanes halogénés.

7. Procédé selon l'une quelconque des revendications 1 à 5, **caractérisé en ce qu'**il sert à la fabrication de polycarbosilanes halogénés.

8. Procédé selon l'une quelconque des revendications précédentes, **caractérisé en ce que** des oligomères halogénés et/ou des polymères halogénés qui comprennent presque exclusivement des substituants halogène sont fabriqués.

9. Procédé selon l'une quelconque des revendications précédentes, **caractérisé en ce que** des oligogermasilanes chlorés et/ou des polygermasilanes chlorés (PCGS) sont synthétisés à partir de RₙSiCl₄₋ₙ (R = H et/ou radical organique, n = 0 à 4), R'ₘGeCl₄₋ₘ (R' = H et/ou radical organique, m = 0 à 4, m + n = 0 à 7) et/ou H₂.

10. Procédé selon l'une quelconque des revendications précédentes, **caractérisé en ce que** des oligocarbosilanes chlorés et/ou des polycarbosilanes chlorés (PCCS) sont synthétisés à partir de RₙSiCl₄₋ₙ (R = H et/ou radical organique, n = 0 à 3) et CH₄.

11. Procédé selon l'une quelconque des revendications précédentes, **caractérisé en ce que** le premier et/ou le second agent de formation de chaîne sont un halogénure d'un élément des groupes principaux III à V de formule EₐX_{b}R_{c} (E = atome de l'élément, 1 ≤ a, X = atome d'halogène, 1 ≤ b, R = H et/ou radical organique et/ou autre substituant, 0 ≤ c).

12. Oligomères halogénés et/ou polymères halogénés, **caractérisés en ce qu'**ils ont été fabriqués par un procédé selon les revendications précédentes.

13. Utilisation d'oligomères halogénés et/ou de polymères halogénés selon la revendication 12 en tant que composé de départ (précurseur) pour la fabrication d'alliages.

14. Utilisation d'oligomères halogénés et/ou de polymères halogénés selon la revendication 12 pour la fabrication de carbures ou de nitrures.

15. Utilisation selon la revendication 14 pour le dépôt de couches de carbure ou de nitrure sur des substrats.
